# EUROPÄISCHE PATENTSCHRIFT

(11) **EP 2 092 793 B1**
(45) Veröffentlichungstag und Bekanntmachung des Hinweises auf die Patenterteilung: **21.04.2010**
(21) Anmeldenummer: 07846253.8
(22) Anmeldetag: 11.10.2007
(51) Int. Cl.: H05B 3/14

(54) **ANORDNUNG AUS ELEKTRISCH LEITFÄHIGER KERAMIK MIT FUNKTIONELLER BESCHICHTUNG**
ARRANGEMENT CONSISTING OF ELECTROCONDUCTIVE CERAMICS HAVING A FUNCTIONAL COATING
DISPOSITIF FORMÉ D'UNE CÉRAMIQUE ÉLECTROCONDUCTRICE PRÉSENTANT UN REVÊTEMENT FONCTIONNEL

(30) Priorität: 11.10.2006 DE 102006048832
(43) Veröffentlichungstag der Anmeldung: 26.08.2009
(73) Patentinhaber: Hermsdorfer Institut für Technische Keramik e.V., 07629 Hermsdorf (DE)
(72) Erfinder: GRÜTZMANN, Dieter, 07646 Stadtroda (DE); FISCHER, Gundula, 07646 Stadtroda (DE); RICHTER, Hannes, 07629 Hermsdorf (DE)
(74) Vertreter: Oehmke, Volker
(86) Internationale Anmeldenummer: PCT/DE2007/001819
(87) Internationale Veröffentlichungsnummer: WO 2008/043353

(56) Entgegenhaltungen:
- EP-A- 0 057 416
- EP-A- 0 515 913
- DE-A1- 19 809 976
- US-A- 5 716 899

## Beschreibung

Die Erfindung betrifft eine Anordnung aus elektrisch leitfähiger Keramik mit funktioneller Beschichtung. Mit der Anordnung wird das Entfeuchten oder auch Befeuchten eines Luftstromes, der durch die Anordnung strömt, ermöglicht.

Nach dem Stand der Technik werden Heizerkomponenten zum Beispiel in Form von keramischen Wabenheizern ausschließlich zum Beheizen strömender Medien, beispielsweise Luft, verwendet (siehe z.B. US 3,927,300; US 4,107,515 oder US 4,570,046). Keramische Adsorbentien, zum Beispiel Zeolith, werden zur Luftentfeuchtung verwendet (zum Beispiel DE 19734440). Dabei kommt das Material häufig in Form von Kugelschüttungen zum Einsatz und die Regeneration erfolgt durch einen trockenen Luftstrom, der zu diesem Zweck durch eine separate Heizvorrichtung vor der Passage des zu regenerierenden Adsorbents erwärmt wird.

In den Anmeldungen DE 4225272 A1 und DE 19805011 A1 werden Adsorptionsfilter, bestehend aus einem elektrisch heizbaren Trägermaterial und daran durch Klemmen oder mittels Haftmasse fixierten Adsorberkörnern bzw. Adsorptionsfiltern, vorgeschlagen. Als Heizer werden in beiden Fällen explizit nur metallische Leiter benannt.

Der Erfindung liegt die Aufgabe zugrunde, eine Möglichkeit aufzuzeigen, durch die es mit möglichst geringem Aufwand gelingt, einen Luftstrom zu entfeuchten oder zu befeuchten.

Erfindungsgemäß wird die Aufgabe bei einer Anordnung dadurch gelöst, dass ein Werkstoffverbund aus einem elektrisch leitfähigen Keramikwerkstoff, der als Trägermaterial dient, und einem zweiten Keramikwerkstoff, der sich durch offene Porosität und hohes Wasserdampfadsorptionsvermögen auszeichnet und auf die Oberfläche des leitfähigen Trägermaterials aufgebracht wird, hergestellt wird. Durch die poröse Oberflächenbeschichtung kann aus einem Luftstrom Wasserdampf adsorbiert werden, bis eine vom Material und dessen Porenstruktur abhängige Sättigungsmenge erreicht ist. Durch Ausheizen kann das adsorbierte Wasser aus den Poren entfernt werden und an einen zweiten unabhängigen Luftstrom als Wasserdampf abgegeben werden. Zum Ausheizen wird vorteilhafterweise durch Anlegen einer geeigneten elektrischen Spannung im Volumen des leitfähigen Trägerwerkstoffes ohmsche Wärme erzeugt. Die Anordnung kann in Form von Rohren, Rohrbündeln, Plattenstapeln oder Wabenkörpern so ausgeführt werden, dass bei niedrigem Strömungswiderstand eine große Wärmeaustauschfläche gegenüber dem Luftstrom zur Verfügung steht. Der elektrisch leitfähige Keramikwerkstoff weist dabei einen spezifischen elektrischen Widerstand im Bereich von 0,001 bis 10.000 Ω*cm auf. Die funktionelle Beschichtung wird mit einer Dicke im Bereich von 0,01 bis 1 mm, vorzugsweise zwischen 0,1 und 0,5 mm, aufgetragen.

Das elektrisch leitfähige Keramikmaterial wird erfindungsgemäß so geformt, dass seine Oberfläche von Luft überströmt werden kann. Die Oberfläche des leitfähigen Materials wird mit dem zweiten Material, zum Beispiel Zeolith oder einer porösen Oxidkeramik, beschichtet, dass aufgrund seiner speziellen Porenstruktur in der Lage ist, Wasser, das in Form von Luftfeuchte im Luftstrom gelöst ist, zu adsorbieren und damit den Wasserdampfgehalt des Luftstromes zu vermindern. Ist das Porenvolumen der Zeolithbeschichtung bis zur Sättigung mit Wasser gefüllt, kann es durch Beheizen des elektrisch leitfähigen Trägers erwärmt werden, so dass das adsorbierte Wasser wieder an den Luftstrom abgegeben wird. Durch eine geeignete Steuerung des Luftstromes kann die Anordnung wechselweise mit einem zu trocknenden Luftstrom bzw. mit einem Frischluftstrom durchströmt werden.

Die Anordnung soll sich durch kompakte Bauform und niedrigen Strömungswiderstand auszeichnen. Durch direkten Kontakt des Adsorbents zum Heizer lässt sich der einmal mit Wasser beladene Adsorbent schnell regenerieren. Dadurch können mit relativ geringen Adsorbentvolumina bei kurzem Wechsel zwischen Adsorptions- und Resorptionszyklus ausreichend hohe Mengen an Wasser mit einem Luftstrom ausgetauscht werden. Wird die Vorrichtung statt mit einem relativ trockenen Frischluftstrom mit einem mit Wasserdampf gesättigten Luftstrom verbunden und so bis zur Sättigung mit Wasser beladen, kann der folgende Resorptionszyklus bei Bedarf auch zur gezielten Befeuchtung eines Luftvolumens genutzt werden.

Durch Verwendung eines organophilen Adsorbents anstelle des hydrophilen Adsorbents kann die Anordnung auch zum Abtrennen flüchtiger, organischer Substanzen (VOC's) aus Gasströmen verwendet werden. VOC-haltige Medien, wie z.B. Abluftströme oder Prozessgase können im Absorptionszyklus gereinigt werden. Im Resorptionszyklus würde mit einer deutlich geringeren Gasdurchströmung gearbeitet werden. Die dabei entstehenden hoch verunreinigten Gase können dann einer Weiterbehandlung (Reinigung, Verbrennung) zugeführt werden. Des Weiteren kann die Anordnung auch zur Gewinnung von VOC's aus Gaströmen verwendet werden. Dabei ist die Verfahrensweise identisch zu beschriebenen Reinigung von Abluftströmen oder Prozessgasen. Als Produkt wird jedoch das Abgas des Resorptionszuklus genutzt. Darin erreichen die VOC's hinreichend hohe Konzentrationen, um mit herkömmlichen Technologien gewonnen werden zu können.

Aufgrund ihrer kompakten Bauform und der festen Bindung des Adsorbents an den keramischen beheizbaren Träger zeichnet sich die erfindungsgemäße Anordnung durch Robustheit und geringen Platzbedarf aus, so dass sie auch für Anwendungen in der Automobiltechnik, das heißt zum Beheizen und zur Feuchteregulierung von Fahrgasträumen in Pkws oder Lkws geeignet ist.

Die Erfindung soll nachstehend anhand von Ausführungsbeispielen näher erläutert werden. Die Zeichnungen zeigen:
- Fig. 1: eine erfindungsgemäße Anordnung in zwei Ansichten und einer Schnittdarstellung,
- Fig. 2: eine weitere schematische Darstellung in ebenfalls zwei Ansichten sowie einer Schnittdarstellung und
- Fig. 3: eine dritte Ausführungsform in zwei Ansichten, eine Schnittdarstellung und einem Ausschnitt aus der Schnittdarstellung.

### Beispiel 1:

Ein Titanoxidpulver mit einer mittleren Korngröße von etwa 1-2 µm wird unter Zugabe eines Plastifizierungssystems, bestehend aus organischem Binder, Gleitmittel, Weichmacher und Wasser, in einem Kneter zu einer steifplastisch formbaren Masse aufbereitet.

Aus dieser Masse werden mittels Extrusion Rohre von 10 mm Außendurchmesser und 1,5 mm Wandstärke hergestellt. Nach Austreiben der organischen Bestandteile werden die Rohre bei Temperaturen von 1200 bis 1350 °C und Haltezeiten von 0,5 bis 5 h in Wasserstoffatmosphäre gesintert.

Im Ergebnis entsteht ein leitfähiger Werkstoff mit einem spezifischen elektrischen Widerstand von etwa 5 Ω*cm.

Die rohrförmigen Sinterkörper werden auf definierte Längen, beispielsweise 60 mm zugeschnitten. Die Stirnseiten werden mit leitfähiger metallhaltiger Siebdruckpaste bedruckt und bei 600 °C eingebrannt. Nach dem Einbrennen der metallischen Kontakte werden die Rohre durch Tauchen in eine 10 %ige wässrige Suspension von beispielsweise Zeolith vom NaA-Typ oder vom NaY-Typ und 5 Gew-% einer Binderphase, beispielsweise eines anorganischen Binders wie kolloidalem Kieselsol beschichtet. Diese Beschichtung wird zunächst bei Raumtemperatur getrocknet und anschließend bei Temperaturen von 200°C für zwei Stunden gehärtet. Auf Grund des hohen Porenvolumens , der speziellen Porenstruktur und des stark hydrophilen Charakters können die so aufgebrachten Schichten bis zu 20 % (NaA) bzw. 30 % (NaY) ihres Eigengewichtes an Wasser aufnehmen.

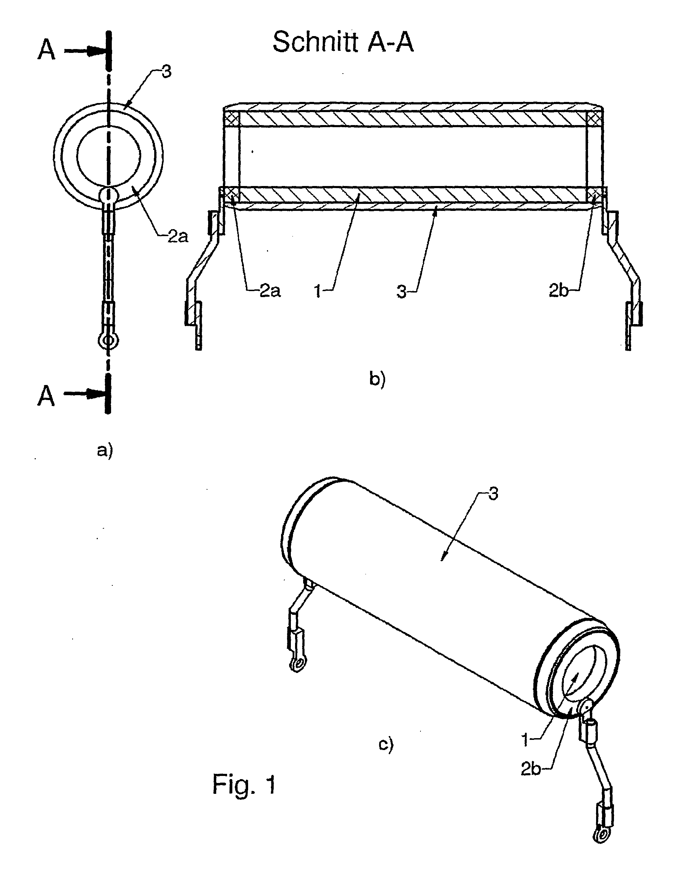

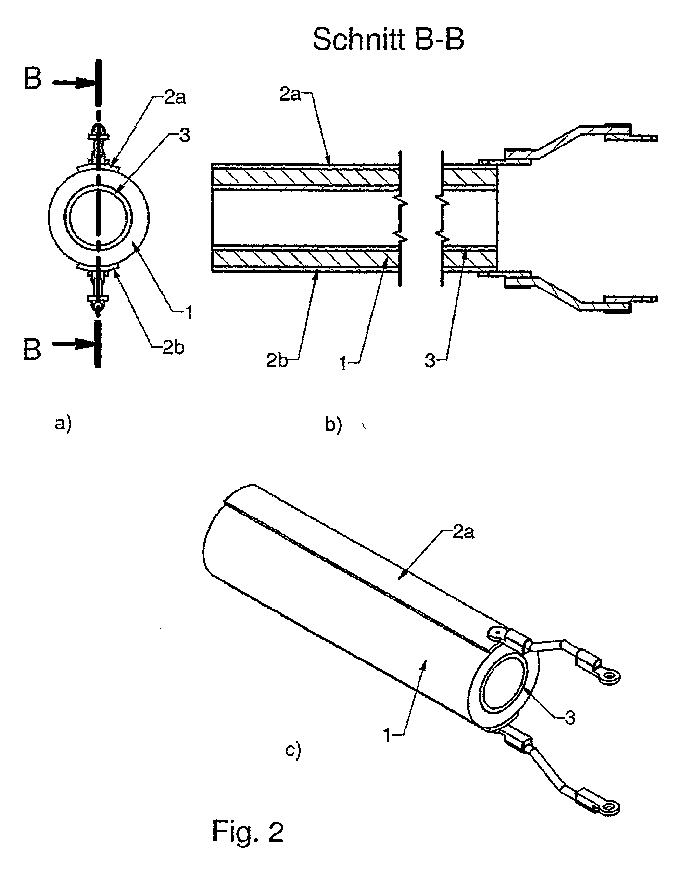

Durch Anlegen einer elektrischen Spannung von beispielsweise 42 V an die Elektroden des leitfähigen beschichteten Rohres kann direkt im Titanoxidrohr eine elektrische Leistung umgesetzt werden, die ausreicht, um das beschichtete Rohr um 60 bis 200 Kelvin gegenüber seiner Umgebung zu erwärmen. Dadurch wird das Wasser aus den Poren der Zeolithbeschichtung resorbiert und an den an der Oberfläche vorbeiziehenden Luftstrom abgegeben. Nach Abschalten der Heizspannung wird das beschichtete trockene Rohr im Luftstrom abgekühlt und ist innerhalb von 1 bis 2 min. wieder bereit, Wasserdampf auf seiner Oberfläche zu adsorbieren. In Fig. 1 ist eine solche Anordnung bestehend aus einem elektrisch leitfähigen Keramikkörper 1 mit stirnseitig aufgebrachten Metallelektroden 2a und 2b sowie der Wasser adsorbierenden Beschichtung 3 auf dem Außenmantel des Keramikkörpers 1 schematisch dargestellt. Fig. 2 zeigt eine geometrische Abwandlung dieser Anordnung, bei der die Metallelektroden 2a und 2b als parallele Streifen auf dem Außenmantel des Keramikkörpers 1 aufgebracht sind, während sich die adsorptionsfähige Beschichtung 3 auf der inneren Rohroberfläche befindet. Diese Variante der Anordnung erlaubt aufgrund ihres geometrisch bedingten niedrigeren elektrischen Widerstandes das Ausheizen des Rohres mit niedrigeren Betriebsspannungen, während die Innenseite des Rohres beispielsweise mit geeigneten Schlauchleitungen einfach an einen zu trocknenden Luftstrom angeschlossen werden kann.

### Beispiel 2:

Ein Gemisch aus Bariumtitanatpulver mit 6 Gew.-% Kalziumtitanatpulver hoher Reinheit und 0,2 Gew.-% Lanthanoxid als Donatordotierung sowie 0,03 Gew.-% Mangancarbonat als Akzeptordotierung, wird durch Feinmahlen in einer Trommelmühle auf eine mittlere Korngröße von 1 bis 2 µm zerkleinert und anschließend getrocknet. Mit Hilfe organischer Bindemittel und Plastifikatoren analog Beispiel 1 wird daraus eine steifplastisch formbare Masse hergestellt. Aus dieser Masse werden mittels Extrusion wabenförmige Körper mit einer Grundfläche von 50 x 50 mm und einer Höhe von etwa 40 mm hergestellt. Die Zellweite der Wabenkörper beträgt etwa 2 mm, ihre Wandstärke 0,4 mm, wodurch ein von Luft durchströmbarer Anteil der Querschnittsfläche von über 70 % erreicht wird.

Nach Trocknung, Austreiben der organischen Bestandteile und Sinterung bei 1280 bis 1380 °C und einer Haltezeit von 0,5 bis 2 h lassen sich daraus keramische Wabenkörper herstellen, die nach Metallisierung der gegenüberliegenden offenen Stirnflächen elektrische Widerstände von z.B. 20 Ohm bei Raumtemperatur aufweisen. Ihre Widerstands-Temperatur-Kennlinie ist durch die für halbleitendes Bariumtitanat typische PTC-Kennlinie mit einer Bezugstemperatur von 120 °C, einem maximalen Temperaturkoeffizienten von ca. 15 %/K und einem Widerstandsanstieg um etwa vier Größenordnungen charakterisiert.

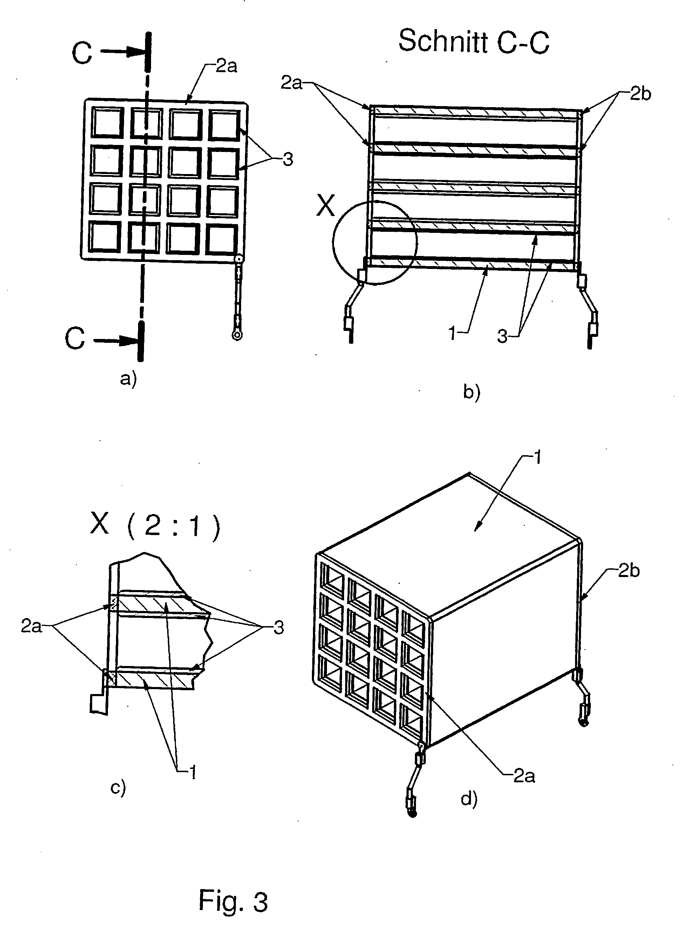

Ein solcher Wabenkörper wird auf seiner Oberfläche im Tauchverfahren analog dem Beispiel 1 mit NaA-Zeolith oder NaY-Zeolith beschichtet. Mit einer 90 µm dicken Zeolithschicht auf dem Bariumtitanatträger wird es möglich, an der beschichteten Oberfläche der Wabenkörper bis zu 0,5 mg/cm² Wasserdampf aus der umgebenden Atmosphäre zu adsorbieren. Diese Wasseraufnahme erfolgt nur bis zur Sättigung des Zeolith-Porenvolumens. Soll der Umgebungsluft weitere Feuchtigkeit entzogen werden, ist eine Regeneration durch Durchströmung mit trockener Luft oder durch Ausheizen erforderlich. Mit Betriebsspannungen von beispielsweise 42 V kann die beschichtete PTC-Keramikwabe in wenigen Sekunden auf eine durch die Werkstoffzusammensetzung bestimmte definierte Oberflächentemperatur von beispielsweise 130°C erwärmt werden, wodurch das adsorbierte Wasser wieder resorbiert wird. Während der Wasserresorption wird der Luftstrom durch geeignete Maßnahmen zu einem Raum außerhalb des zu trocknenden Luftvolumens geleitet. Aufgrund seines hohen Oberflächen-Volumen-Verhältnisses lässt sich der Wabenkörper nach erfolgtem Wasserentzug durch einen Luftstrom von beispielsweise 10 l/s innerhalb von 1 bis 2 Minuten wieder auf Umgebungstemperatur abkühlen, wodurch er erneut zur Adsorption von Luftfeuchtigkeit bereit ist. Durch periodischen Wechsel zwischen Umluftbetrieb (Luftaustausch mit dem zu trocknenden Luftvolumen) bei kaltem Wabenkörper und Abluftbetrieb während des Ausheizens lässt sich damit in wirkungsvoller Weise die relative Luftfeuchtigkeit eines vorgegebenen Luftvolumens absenken. Mehrere Wabenkörper können in einfacher Weise im Luftstrom nebeneinander gereiht werden, wobei sie elektrisch parallel zu schalten sind. In Fig. 3 ist ein Prinzipbeispiel für eine solche Anordnung dargestellt. Der wabenförmige elektrisch leitfähige Keramikkörper 1 ist stirnseitig mit Metallelektroden 2a und 2b beschichtet, während die Innenflächen der Wabenkanäle mit der adsorptionsfähigen Beschichtung 3 versehen sind.

### Beispiel 3:

Ein Keramikkörper 1 gemäß Beispiel 1 oder 2 wird mit einer NaA-Zeolithschicht, analog Ausführungsbeispiel 1 beschichtet. Nach der Härtung der Beschichtung 3 erfolgt eine hydrothermale Kristallisation in einer wässrigen Lösung einer Zusammensetzung 1 SiO₂ : 0,5 Al₂O₃ : 1 Na₂O : 60 H₂O bei einer Temperatur von 90 °C über 6 h, so dass ein weiteres Wachstum der bereits aufgebrachten polykristallinen NaA-Zeolithe und somit eine Schichtverstärkung erfolgt. Nach der hydrothermalen Kristallisation erfolgt ein Waschen in entsalztem Wasser mit anschließender Trocknung bei 150 °C.

### Beispiel 4:

Ein elektrisch leitfähiger Keramikkörper 1 gemäß Beispiel 1 oder 2 wird in eine Suspension nanokristalliner Zeolithpartikel zwecks Belegung der Trägeroberfläche mit Kristallisationskeimen getaucht und anschließend getrocknet. Danach wird der so vorbehandelte Keramikkörper 1 einer hydrothermalen Kristallisation gemäß Beispiel 3 unterzogen und anschließend gewaschen und getrocknet.

### Beispiel 5:

Ein elektrisch leitfähiger Keramikkörper 1 gemäß Beispiel 1 oder 2 wird mit einem kolloidalen Sol, z.B. einem SiO₂-Sol, dass zur Erhöhung der Viskosität mit einem organischen Binder versetzt wurde, z.B. 1 % Polyvenylakohol durch Tauchen beschichtet. Der Keramikkörper wird bei RT getrocknet und bei 200°C unter Luft gebrannt. Die sich so ausbildende poröse, amorphe SiO₂-Schicht kann auf Grund ihres Porenvolumens und Porenstruktur und des stark hydrophilen Charakters mindestens 3 % ihres Eigengewichtes an Wasser aufnehmen

### Beispiel 6:

Ein elektrisch leitfähiger Keramikkörper 1 gemäß Beispiel 1 oder 2 wird durch Tauchen in eine 10 %ige wässrige Suspension von beispielsweise Zeolith vom MFI-Typ, vorzugsweise Silikalith, und 5 Gew-% einer Binderphase, beispielsweise eines anorganischen Binders wie kolloidalem Kieselsol beschichtet. Diese Beschichtung wird zunächst bei Raumtemperatur getrocknet und anschließend bei Temperaturen von 200°C für zwei Stunden gehärtet. Auf Grund des hohen Porenvolumens, der speziellen Porenstruktur und des stark organophilen Charakters können die so aufgebrachten Schichten mindestens 3 % ihres Eigengewichtes an organischen Lösemitteln, wie z.B. Ethanol aufnehmen. Die Anordnung kann analog zu Beispiel 1 nach Sättigung mit organischen Lösemitteln durch Anlegen einer elektrischen Spannung regeneriert werden.

### Beispiel 7:

Ein Keramikkörper 1 gemäß Beispiel 1 oder 2 wird mit einer MFI-Zeolithschicht, analog Ausführungsbeispiel 6 beschichtet. Nach der Härtung der Beschichtung 3 erfolgt eine hydrothermale Kristallisation in einer wässrigen Lösung einer Zusammensetzung 1 SiO₂ : 0,1 Na₂O : 3,5 Tetrapropylamoniumbromid (TPABr) : 400 H₂O bei einer Temperatur von 150°C über 72 h, so dass ein weiteres Wachstum der bereits aufgebrachten polykristallinen MFI-Zeolithe und somit eine Schichtverstärkung erfolgt. Nach der hydrothermalen Kristallisation erfolgt ein Waschen in entsalztem Wasser mit anschließender Trocknung bei 150 °C sowie ein Brennen unter Luft bei 450°C zum Ausbrennen des Templates TPABr.

### Beispiel 8:

Ein elektrisch leitfähiger Keramikkörper 1 gemäß Beispiel 1 oder 2 wird in eine Suspension nanokristalliner MFI-Zeoüthpartikel zwecks Belegung der Trägeroberfläche mit Kristallisationskeimen getaucht und anschließend getrocknet. Danach wird der so vorbehandelte Keramikkörper 1 einer hydrothermalen Kristallisation gemäß Beispiel 7 unterzogen und anschließend gewaschen und getrocknet.

## Patentansprüche

1. Anordnung aus elektrisch leitfähiger Keramik mit funktioneller Beschichtung, **dadurch gekennzeichnet, dass**
- die elektrisch leitfähige Keramik einen spezifischen elektrischen Widerstand im-Bereich von 0,001 bis 10.000 Ω*cm aufweist und
- die funktionelle Beschichtung aus einem Material mit hohem Adsorptionsvermögen für Wasserdampf besteht, wobei die Beschichtung eine Dicke im Bereich von 0,01 bis 1 mm aufweist.

2. Anordnung nach Anspruch 1, **dadurch gekennzeichnet,**
**dass** die elektrisch leitfähige Keramik einen Körper mit hohem Oberflächen-Volumen-Verhältnis darstellt.

3. Anordnung nach Anspruch 1 und 2, **dadurch gekennzeichnet,**
**dass** der Körper die Form von Waben, Rohren, Rohrbündeln, Platten, Plattenstapeln oder Faserbündeln aufweist.

4. Anordnung nach Anspruch 1 bis 3, **dadurch gekennzeichnet,**
**dass** die funktionelle Beschichtung an den Innenwänden und/oder Außenwänden des Körpers aufgetragen ist, so dass den Gasströmen, die durch den Körper geleitet werden, das Wasser entzogen wird.

5. Anordnung nach Anspruch 1 bis 4, **dadurch gekennzeichnet,**
**dass** durch Anlegen einer geeigneten elektrischen Spannung an den Körper die funktionelle Beschichtung ausgeheizt wird, so dass ihr Wasseraufnahmevermögen nach Erreichen der Sättigung selbsttätig regeneriert wird.

6. Anordnung nach Anspruch 1 bis 5, **dadurch gekennzeichnet,**
**dass** die elektrisch leitfähige Keramik aus oxidischen Keramikwerkstoffen wie Aluminiumoxid, Titanoxid, Magnesiumoxid, Zinkoxid, Siliziumoxid, Zinnoxid, Bariumoxid, Kalziumoxid, Bleioxid, Strontiumoxid oder von diesen Oxiden abgeleitete Titanate, Zirkonate, Stannate oder Silikate sowie feste Lösungen und/oder Gemische aus diesen besteht.

7. Anordnung nach Anspruch 1 bis 5 **dadurch gekennzeichnet,**
**dass** die elektrisch leitfähige Keramik aus nichtoxidischen Keramikwerkstoffen wie Titankarbid, Siliziumkarbid, Borkarbid oder Gemischen dieser Werkstoffe untereinander besteht.

8. Anordnung nach Anspruch 6 und 7, **dadurch gekennzeichnet,**
**dass** die elektrisch leitfähige Keramik sowohl aus oxidischen als auch aus nichtoxidischen Keramikwerkstoffen besteht.

9. Anordnung nach Anspruch 1 bis 6, **dadurch gekennzeichnet,**
**dass** als oxidischer Keramikwerkstoff ein halbleitender, ferroelektrischer Titanatwerkstoff mit positivem Temperaturkoeffizienten des elektrischen Widerstandes (PTC-Werkstoff) verwendet wird, so dass beim Ausheizen der Anordnung die selbsttätige Temperaturbegrenzung des PTC-Werkstoffes genutzt wird.

10. Anordnung nach Anspruch 1 bis 9, **dadurch gekennzeichnet,**
**dass** die Dicke der Beschichtung im Bereich zwischen 0,1 und 0,5 mm liegt.

## Claims

1. An arrangement consisting of electroconductive ceramics having a functional coating, **characterised in that**
- said electroconductive ceramics have a specific electrical resistance of from 0.001 to 10,000 Ω*cm, and
- said functional coating consists of a material with high adsorption capacity for water vapour, said coating having a thickness of from 0.01 to 1 mm.

2. The arrangement according to claim 1, **characterised in that** the electroconductive ceramics constitute a body with a high surface area to volume ratio.

3. The arrangement according to claims 1 and 2, **characterised in that** said body is in the shape of a honeycomb, tubes, tube bundles, plates, stacks of plates, or fibre bundles.

4. The arrangement according to claims 1 to 3, **characterised in that** the functional coating is applied to the internal and/or external walls of the body such that the water is extracted from the gas flows conducted through the body.

5. The arrangement according to claims 1 to 4, **characterised in that** the functional coating is cured by applying a suitable voltage to the body so that its water-absorbing capacity is automatically regenerated after reaching saturation.

6. The arrangement according to claims 1 to 5, **characterised in that** the electroconductive ceramics consist of oxidic ceramic materials, such as aluminium oxide, titanium oxide, magnesium oxide, zinc oxide, silicon oxide, tin oxide, barium oxide, calcium oxide, lead oxide, strontium oxide, or of titanates, zirconates, stannates or silicates derived from said oxides, as well as solid solutions and/or mixtures thereof.

7. The arrangement according to claims 1 to 5, **characterised in that** the electroconductive ceramics consist of non-oxidic ceramic materials, such as titanium carbide, silicon carbide, boron carbide, or mixtures of these materials with each other.

8. The arrangement according to claims 6 and 7, **characterised in that** the electroconductive ceramics consist of both oxidic and non-oxidic ceramic materials.

9. The arrangement according to claims 1 to 6, **characterised in that** the oxidic ceramic material used is a semiconductive, ferroelectric titanate material with a positive temperature coefficient of electrical resistivity (PTC material), so that the automatic temperature limitation of the PTC material is utilised in curing the arrangement.

10. The arrangement according to claims 1 to 9, **characterised in that** the coating has a thickness of between 0.1 and 0.5 mm.

## Revendications

1. Dispositif formé d'une céramique électroconductrice présentant un revêtement fonctionnel, ledit dispositif étant **caractérisé en ce que**
- ladite céramique électroconductrice présente une résistance spécifique électrique de 0,001 à 10.000 Ω*cm, et
- le revêtement fonctionnel est constitué d'un matériau présentant une capacité élevée d'adsorption de vapeur d'eau, ledit revêtement présentant une épaisseur de 0,01 à 1 mm.

2. Dispositif selon la revendication 1, **caractérisé en ce que** la céramique électroconductrice constitut un corps présentant un rapport surface:volume élevé.

3. Dispositif selon les revendications 1 et 2, **caractérisé en ce que** ledit corps présente la forme de nids d'abeilles, de tubes, de faisceaux de tubes, de plaques, d'empilements de plaques, ou de faisceaux de fibres.

4. Dispositif selon les revendications 1 à 3, **caractérisé en ce que** le revêtement fonctionnel est appliqué sur les parois intérieures et/ou extérieures dudit corps de sorte que l'eau soit extraite des courants de gaz passés à travers ledit corps.

5. Dispositif selon les revendications 1 à 4, **caractérisé en ce que** le revêtement fonctionnel est durci en soumettant le corps à une tension appropriée de manière à ce que sa capacité d'absorption d'eau soit automatiquement régénérée ayant atteint la saturation.

6. Dispositif selon les revendications 1 à 5, **caractérisé en ce que** la céramique électroconductrice est constitué d'oxydes, tels que l'oxyde d'aluminium, l'oxyde de titane, l'oxyde de magnesium, l'oxyde de zinc, l'oxyde de silicium, l'oxyde d'étain, l'oxyde de baryum, l'oxyde de calcium, l'oxyde de plomb, l'oxyde de strontium, ou de titanates, zirconates, stannates ou silicates dérivés desdits oxydes, ainsi que des solutions solides et/ou leurs mélanges.

7. Dispositif selon les revendications 1 à 5, **caractérisé en ce que** la céramique électroconductrice est constitué de non-oxydes, tels que le carbure de titane, le carbure de silicium, le carbure de bore, ou leurs mélanges.

8. Dispositif selon les revendications 6 et 7, **caractérisé en ce que** la céramique électroconductrice est constitué d'oxydes ainsi que de non-oxydes.

9. Dispositif selon les revendications 1 à 6, **caractérisé en ce que** l'oxyde utilisé est un matériau sémiconducteur et ferroélectrique à base de titanate, ledit matériau présentant un coefficient de température positif de résistance (matériau CTP), de sorte que la limitation automatique de température du matériau CTP soit utilisée pour le durcissement du dispositif.

10. Dispositif selon les revendications 1 à 9, **caractérisé en ce que** ledit revêtement présente une épaisseur comprise entre 0,1 et 0,5 mm.
